(19) **Europäisches Patentamt**

**European Patent Office**

**Office européen des brevets**

(11) Veröffentlichungsnummer: **0 644 214 A1**

(12) **EUROPÄISCHE PATENTANMELDUNG**

(21) Anmeldenummer: **94114214.3**

(22) Anmeldetag: **09.09.94**

(51) Int. Cl.⁶: **C08F 285/00**, C08L 51/00,
//(C08F285/00,212:08,220:14)

(30) Priorität: **18.09.93 DE 4331804**

(43) Veröffentlichungstag der Anmeldung:
**22.03.95 Patentblatt 95/12**

(84) Benannte Vertragsstaaten:
**BE DE ES FR GB IT NL**

(71) Anmelder: **BASF Aktiengesellschaft**
**Carl-Bosch-Strasse 38**
**D-67063 Ludwigshafen (DE)**

(72) Erfinder: **Fischer, Wolfgang, Dr.**
**Lindenberger Strasse 4**
**D-67067 Ludwigshafen (DE)**
Erfinder: **Güntherberg, Norbert, Dr.**
**Nachtigallenweg 44**
**D-67346 Speyer (DE)**
Erfinder: **Weiss, Robert, Dr.**
**Brüsseler Ring 53**
**D-67069 Ludwigshafen (DE)**

(54) **Teilchenförmiges Pfropfcopolymerisat.**

㊼ Teilchenförmiges Pfropfpolymerisat A aus

A1: einer Pfropfgrundlage auf der Grundlage eines Polydienkautschuks A1 aus, bezogen auf A1,

A11: 70 bis 100 Gew.-% eines polymerisierbaren Diens und

A12: bis zu 30 Gew.-% eines copolymerisierbaren, ethylenisch ungesättigten Monomeren

mit einer ersten Pfropfhülle A2 aus, bezogen auf A2,

A21: 75 bis 99,8 Gew.-% mindestens eines $C_1$-$C_8$-Alkylacrylats A21,

A22: 0,1 bis 5 Gew.-% mindestens eines polyfunktionellen, vernetzend wirkenden Monomeren A22,

A23: 0,1 bis 20 Gew.-% mindestens eines eine oder mehrere saure oder basische Gruppen enthaltenden Monomeren A23,

und einer zweiten Pfropfhülle A3, bestehend aus, bezogen auf A3,

A31: bis 99,9 Gew.-% mindestens eines vinylaromatischen Monomeren oder Methylmethacrylat (A31),

A32: 0,1 bis 20 Gew.-% mindestens eines eine oder mehrere basische bzw. saure Gruppen enthaltenden Monomeren A32 und

A34: bis 5 Gew.-% mindestens eines polyfunktionellen, vernetzend wirkenden Monomeren A33,

wobei A23 und A33 jeweils unterschiedliche Gruppen bedeuten.

EP 0 644 214 A1

Die Erfindung betrifft teilchenförmige Pfropfcopolymerisate, die als Kautschukkomponente für thermoplastische Formmassen mit vermindertem Oberflächenglanz, guter Witterungsbeständigkeit und guter Kältezähigkeit geeignet sind.

Polymere Werkstoffe mit matter Oberfläche sind von wachsendem Interesse für unterschiedlichste Anwendungen, beispielsweise bei Automobilinnenteilen, bei denen es auf blendfreie Oberflächen bei gleichzeitig guter Zähigkeit auch in der Kälte ankommt.

Es ist bekannt, zur Erzeugung von matten Oberflächen gleichzeitig sowohl saure als auch basische Monomere in die Hülle eines Pfropfkautschuks einzubauen (DE-A 34 21 353).

DE 34 05 938 beschreibt den Einsatz von Pfropfpolymerisaten mit sauren Funktionen in einer basisch modifizierten Thermoplastmatrix. DE 40 11 163 beschreibt die Verwendung eines sauren Monomeren im Kautschukkern bei gleichzeitigem Einsatz eines basischen Monomeren in der Pfropfhülle. Derartige Polymere zeichnen sich zwar durch eine relativ matte Oberfläche aus, die Kältezähigkeit ist jedoch bei Verwendung von Kautschuken auf Acrylatbasis nicht für alle Anwendungen ausreichend. Verwendet man zur Herstellung von matten Produkten nach der Lehre der DE 40 11 163 einen Polydienkautschuk, so erhält man zwar Produkte mit besserer Kältezähigkeit, jedoch nur mäßiger Witterungsbeständigkeit; aufgrund der längeren Polymerisationszeit und der größeren Empfindlichkeit gegen Koagulatbildung lassen sie sich auch nur mit unbefriedigender Wirtschaftlichkeit produzieren.

DE 3 149 046 beschreibt Pfropfkautschuke mit Kern-Schale-Aufbau, jedoch ohne Säure/Base-Modifizierung.

Aufgabe war daher, einen Pfropfkautschuk zur Verfügung zu stellen, der zu matten Produkten mit besserer Kältezähigkeit, guter Witterungsbeständigkeit führt und besser produzierbar ist.

Die Lösung dieser Aufgabe wird erreicht durch Verwendung eines mehrstufig aufgebauten Pfropfkautschuks mit einem Kern aus einem - gegebenenfalls mit bis zu 30 Gew.-% eines weiteren Monomeren copolymerisierten - Polydienkautschuk, versehen mit einer ersten Pfropfhülle aus einem $C_1$-$C_8$-Acrylatkautschuk, der bis zu 20 Gew.-% eines entweder sauer oder basisch funktionalisierten Comonomeren enthält und mit einer zweiten Pfropfhülle aus Styrol, $\alpha$-Methylstyrol oder Methylmethacrylat, welche, bezogen auf die 2. Pfropfhülle, bis zu 20 Gew.-% einer copolymerisierbaren Base bzw. Säure enthält, derart daß die beiden Pfropfhüllen jeweils unterschiedlich (sauer/basisch) funktionalisiert sind.

Unmittelbarer Gegenstand der Erfindung ist somit ein teilchenförmiges Pfropfpolymerisat A aus

A1: einer Pfropfgrundlage A1 auf der Grundlage eines Polydienkautschuks aus, bezogen auf A1,
A11: 70 bis 100 Gew.-% eines polymerisierbaren Diens,
A12: bis zu 30 Gew.-% eines copolymerisierbaren, ethylenisch ungesättigten Monomeren,
versehen mit einer ersten Pfropfhülle A2 aus, bezogen auf A2,
A21: 75 bis 99,8 Gew.-% mindestens eines $C_1$-$C_8$-Alkylacrylats,
A22: 0,1 bis 5 Gew.-% mindestens eines polyfunktionellen, vernetzend wirkenden Monomeren A22,
A23: 0,1 bis 20 Gew.-% mindestens eines eine oder mehrere entweder saure oder basische Gruppen enthaltenden Monomeren A23,
versehen mit einer Zweiten Pfropfhülle A3, bestehend aus, bezogen auf A3,
A31: bis 99,9 Gew.-% mindestens eines vinylaromatischen Monomeren oder Methylmethacrylat (MMA) A31,
A32: 0,1 bis 20 Gew.-% mindestens eines eine oder mehrere basische bzw. saure Gruppen enthaltenden Monomeren A32 und
A33: bis 5 Gew.-% mindestens eines polyfunktionellen, vernetzend wirkenden Monomeren A33,
wobei A23 und A32 jeweils unterschiedliche Gruppen bedeuten und daraus hergestellte Formmassen.

Über die Zusammensetzung der erfindungsgemäßen Formmasse und ihre Herstellung ist im einzelnen das folgende zu sagen:

Komponente A:

Zunächst wird als Pfropfkern ein Kautschuklatex auf herkömmliche Weise hergestellt. Der Grundkautschuk ist durch seine Glastemperatur definiert, die unterhalb von -40 °C, vorzugsweise unterhalb von -60 °C liegen soll. Als Monomere A11 kommen konjugierte Diene mit 4 bis 5 C-Atomen in Betracht, vorzugsweise wird Butadien allein verwendet.

Die Polymerisation der Monomeren A11 oder deren Mischungen mit A12 wird, wie üblich, bei Temperaturen zwischen 30 und 90 °C durchgeführt, in Gegenwart von Emulgatoren, wie z.B. Alkalisalzen von Alkyl- oder Alkylarylsulfonaten, Alkylsulfaten, Fettalkoholsulfonaten oder Fettsäuren mit 10 bis 30 Kohlenstoffatomen; vorzugsweise nimmt man Kalium- oder Natriumsalze von Alkylsulfonaten oder Fettsäuren mit 12 bis 18 Kohlenstoffatomen. Die Emulgatoren werden in Mengen von 0,3 bis 5, insbesondere von 1,0 bis 2,0 Gew.-%, bezogen auf die Monomeren, verwendet. Es werden die üblichen Puffersalze, wie Natriumbicarbonat und Natriumpyrophosphat verwendet.

Ebenso werden die üblichen Initiatoren, wie Persulfate oder organische Peroxide mit Reduktionsmitteln verwendet, sowie gegebenenfalls Molekulargewichtsregler, wie Mercaptane, Terpinole oder dimeres $\alpha$-Methylstyrol, die am Anfang oder während der Polymerisation zugegeben werden. Das Gewichtsverhältnis Wasser zu Monomere liegt vorzugsweise zwischen 2:1 und 1:1. Die Polymerisation wird so lange fortgesetzt, bis mehr als 90 %, vorzugsweise mehr als 96 % der Monomeren polymerisiert wird. Dieser Umsatz ist im allgemeinen nach 4 bis 20 Stunden erreicht. Der dabei erhaltene Kautschuklatex hat eine Teilchengröße, die unterhalb von 0,15 $\mu$m, vorzugsweise zwischen 0,06 und 0,10 $\mu$m liegt. Bei dieser Maßangabe handelt es sich um den $d_{50}$-Wert der integralen Massenverteilung, der beispielsweise mit Hilfe der Ultrazentrifuge oder durch Auszählung elektronenmikroskopischer Aufnahmen bestimmt werden kann. Die Teilchengrößenverteilung solcher Kautschuklatices ist verhältnismäßig eng, so daß man von einem nahezu monodispersen System sprechen kann.

Danach wird der Kautschuklatex in bekannter Weise, z.B. nach der Lehre der DE 24 27 960, agglomeriert. Dies geschieht etwa durch Zugabe einer Dispersion eines Acrylesterpolymerisates. Vorzugsweise werden Dispersionen von Copolymerisaten von Acrylestern von Alkoholen mit 1 bis 4 Kohlenstoffatomen, vorzugsweise von Ethylacrylat, mit 0,1 bis 10 Gew.-% wasserlösliche Polymerisate bildenden Monomeren, wie z.B. Acrylsäure, Methacrylsäure, Acrylamid oder Methacrylamid, N-Methylolmethacrylamid oder N-Vinylpyrrolidon, eingesetzt. Besonders bevorzugt ist ein Copolymerisat aus 96 % Ethylacrylat und 4 % Methacrylamid. Die Agglomerierdispersion kann gegebenenfalls auch mehrere der genannten Acrylesterpolymerisate enthalten.

Die Konzentration der Acrylesterpolymerisate in der Dispersion soll im allgemeinen zwischen 3 und 40 Gew.-% liegen. Bei der Agglomeration werden 0,2 bis 20, vorzugsweise 1 bis 5 Gew.-Teile der Agglomerierdispersion auf 100 Teile des Kautschuklatex, jeweils berechnet auf Feststoffe, eingesetzt. Die Agglomeration wird durch Zugabe der Agglomerierdispersion zum Kautschuk durchgeführt. Die Geschwindigkeit der Zugabe ist normalerweise nicht kritisch, im allgemeinen dauert sie etwa 1 bis 30 Minuten bei einer Temperatur zwischen 20 und 90 °C, vorzugsweise zwischen 30 und 75 °C.

Unter den genannten Bedingungen wird nur ein Teil der Kautschukteilchen agglomeriert, so daß eine bimodale oder breite Verteilung entsteht. Dabei liegen nach der Agglomeration im allgemeinen mehr als 50, vorzugsweise zwischen 75 und 95 % der Teilchen (Zahlen-Verteilung) im nicht agglomerierten Zustand vor. Der mittlere Durchmesser der Kautschukteilchen ($d_{50}$-Wert der integralen Massenverteilung) liegt zwischen 0,16 und 0,45 $\mu$m, vorzugsweise zwischen 0,20 und 0,35 $\mu$m. Der erhaltene agglomerierte Kautschuklatex ist verhältnismäßig stabil, so daß er ohne weiteres gelagert und transportiert werden kann, ohne daß Koagulation eintritt.

Erste Pfropfhülle A2:

Der agglomerierte, überwiegend Polybutadien enthaltende Kautschuklatex A1 wird in einer ersten Stufe mit einer Polyacrylsäurealkylesterschale versehen, die entweder ein saure oder ein basische Gruppen aufweisendes Monomer einpolymerisiert enthält.

Der Anteil dieser Schale beträgt 5 bis 60 Gew.-%, vorzugsweise 10 bis 40 Gew.-%, jeweils bezogen auf A1 und A2. Der Anteil von A1, also des Kerns beträgt entsprechend 40 bis 95 bzw. 60 bis 90 Gew.-%.

Die elastomere Schale A2 ist, bezogen auf A2, aufgebaut aus 75 bis 99,8 Gew.-% mindestens eines Esters der Acrylsäure mit einem Alkohol mit 1 bis 8 C-Atomen (A21) und 0,1 bis 5 Gew.-% mindestens eines polyfunktionellen Monomeren (A22) sowie 0,1 bis 20 Gew.-% mindestens eines monoethylenisch ungesättigten, eine oder mehrere entweder saure oder basische Gruppen aufweisenden Monomeren A23.

Zur Herstellung dieser elastomeren Schale (Pfropfhülle) A2 werden in Gegenwart von 5 bis 60 Gew.-%, vorzugsweise 10 bis 40 Gew.-% des agglomerierten Kautschuklatex (bezogen auf den Feststoffgehalt) 40 bis 95 Gew.-%, vorzugsweise 60 bis 90 Gew.-%, mindestens eines Acrylsäurealkylesters A21 mit 1 bis 8, vorzugsweise 2 bis 8 Kohlenstoffatomen im Alkylrest, gegebenenfalls eines weiteren copolymerisierbaren Monomeren wie Styrol, $\alpha$-Methylstyrol, Acrylnitril, Methacrylsäuremethylester oder Vinylmethylether, 0,1 bis 5 Gew.-%, vorzugsweise 0,5 bis 3 Gew.-%, eines copolymerisierbaren polyfunktionellen Monomeren A22 wie Divinylbenzol, Diallylmaleat, Diallylphthalat, Tricyclodecenylacrylat, Triallylcyanurat, und 0,5 bis 10 Gew.-% des sauren bzw. basischen Monomeren A23 polymerisiert. Bevorzugt als Monomere A21 eingesetzt werden Gemische aus Butylacrylat oder Ethylhexylacrylat und Tricyclodecenylacrylat.

Als saure Monomere A23 können z.B. Carbonsäuregruppen oder Sulfonsäuregruppen tragende Vinylverbindungen verwendet werden.

Bevorzugte saure Monomere A23 sind $\alpha,\beta$-ungesättigte Carbonsäuren wie Acrylsäure oder Methacrylsäure, ferner Citraconsäure, Crotonsäure, Fumarsäure, Itaconsäure, Maleinsäure, Vinylsulfonsäure, Vinylbenzolsulfonsäure, Vinylphosphorsäuren oder Zimtsäure. Besonders bevorzugt ist Methacrylsäure.

Als basische Monomere A23 können gegebenenfalls die nachstehend für A32 genannten Verbindungen gewählt werden.

Für die Polymerisation in Emulsion gilt das vorstehend für die Herstellung des Katuschuklatex gesagte.

Pfropfhülle A3

Zur Herstellung der Pfropfhülle A3 des Pfropfmischpolymerisates wird dann in Gegenwart des erhaltenen Latex des vernetzten Acrylsäureester-Polymerisats, das einen Polybutadien-Kern enthält, ein Monomerengemisch aus bis 99,9 Gew.-% mindestens eines vinylaromatischen Monomeren oder Methylmethacrylat A31 und 0,1 bis 20 Gew.-% eines eine oder mehrere basische bzw. saure Gruppen enthaltenden Monomeren A32 sowie bis 5 Gew.-% eines polyfunktionellen, vernetzend wirkenden Monomeren A33 als zweite Propfhülle aufgebracht, wobei besonders bevorzugt die Monomeren A31, d.h. Styrol oder Methylmethacrylat verwendet werden. Es ist vorteilhaft, diese Pfropfmischpolymerisation von Styrol oder MMA und copolymerisierbarer Base bzw. Säure auf das als Pfropfgrundlage dienende vernetzte Polyacrylsäureester-Polymerisat wieder in wäßriger Emulsion unter den üblichen, oben aufgeführten Bedingungen durchzuführen. Die Pfropfmischpolymerisation kann im gleichen System stattfinden wie die Herstellung der Pfropfhülle A2, wobei, falls notwendig, weiterer Emulgator und Initiator zugegeben werden kann. Das aufzupfropfende Monomeren-Gemisch kann dem Reaktionsgemisch auf einmal, absatzweise in mehreren Stufen oder vorzugsweise kontinuierlich während der Polymerisation zugegeben werden. Die Pfropfmischpolymerisation wird so geführt, daß ein Pfropfgrad von 25 bis 45, vorzugsweise von 30 bis 40 Gew.-% resultiert. Da die Pfropfausbeute bei der Pfropfmischpolymerisation unvollständig ist, muß eine etwas größere Menge des Monomeren-Gemisches eingesetzt werden, als es dem gewünschten Pfropfgrad entspricht. Die Steuerung der Pfropfausbeute bei der Pfropfmischpolymerisation und somit des Pfropfgrades des fertigen Pfropfmischpolymerisats ist jedem Fachmann geläufig und kann beispielsweise durch die Dosiergeschwindigkeit der Monomeren oder durch Reglerzugabe erfolgen (Chauvel, Daniel, ACS Polymer Preprints 15 (1974), Seite 329 ff). Bei der Emulsions-Pfropfmischpolymerisation entstehen im allgemeinen etwa 5 bis 15 Gew.-%, bezogen auf das Pfropfmischpolymerisat, an freien, ungepfropften Polymeren.

Außer Styrol können z.B. auch $\alpha$-Methylstyrol, Methacrylsäuremethylester, Acrylsäurealkylester als Pfropfmonomere eingesetzt werden. Die Pfropfhülle kann auch geringe Mengen eines copolymerisierbaren, polyfunktionell vernetzenden Monomeren A33, wie unter A22 aufgeführt, z.B. Divinylbenzol, Diallylphthalat, Triallylcyanurat, Diallylmaleat und andere einpolymerisiert enthalten.

Als Beispiele für basische Monomere A32 seien genannt: Dimethylaminoethyl(meth)acrylat, Morpholinmethacrylat, N-Vinylimidazol, p-Dimethylaminostyrol, N-Vinylcarbazol, 3-Vinylpyridin, 4-Vinylpyridin, sowie deren Gemische. Besonders bevorzugte Monomere sind Ester der Acrylsäure oder Methacrylsäure mit aliphatischen Alkoholen, die im Alkylrest eine tertiäre Aminogruppe enthalten.

Es versteht sich, daß A23 statt einer Säure eine polymerisierbare Base und dann A32 eine entsprechende polymerisierbare Säure sein kann. Die zuerst genannte Kombination ist jedoch bevorzugt.

Die erfindungsgemäßen Pfropfcopolymerisate werden vorteilhaft mit einer thermoplastischen Formmasse B gemischt, wobei der Gehalt des erfindungsgemäßen Pfropfcopolymeren in der thermoplastischen Formmasse B im Bereich von 0,5 bis 60 Gew.-% sein kann.

Als thermoplastische Formmasse kommen alle mit der äußeren Pfropfhülle A3 verträglichen oder teilverträglichen Polymere oder Polymermischungen in Frage. Beispielhaft seien erwähnt für eine Pfropfhülle A3 aus überwiegend Styrol:

Polystyrol, schlagzäh-modifiziertes Polystyrol, Polystyrol/Polyphenylenether-Blends, Polystyrol/Polyolefin-Blends, Polyvinylmethylether-Polystyrol-Blends und deren schlagzäh modifizierte Varianten; für eine Pfropfhülle aus überwiegend MMA:

Polymethylmethacrylat, schlagzäh-modifiziertes PMMA, PVC, Polycaprolacton, SAN, $\alpha$-MS/AN und ABS/ASA, ABS/PC, und ASA/PC-Blends, ferner PMMA/PVDF-Blends, PMMA/PVAc-Blends, PMMA/SAN-Blends und schlagzäh-modifizierte PMMA/SAN-Blends.

Die erfindungsgemäße Formmasse kann noch übliche Zusatzstoffe in wirksamen Mengen enthalten.

Zusatzstoffe sind etwa Pigmente, Farbstoffe, Füllstoffe, Flammschutzmittel, verträgliche Polymere, Antistatika, Antioxydantien und Schmiermittel.

Es hat sich gezeigt, daS die erfindungsgemäßen matten Formmassen die durch das Polybutadien und die sauer modifizierte Polyalkylacrylatschale vorgegebenen Eigenschaften in sich vereinigen, ohne daß die Witterungs- und Alterungsbeständigkeit durch den relativ hohen Anteil an Polybutadien vermindert wird. Die erfindungsgemäßen Formmassen vereinigen deshalb in sich eine hohe Zähigkeit auch in der Kälte, eine hohe Steifigkeit und eine ausgezeichnete Witterungs- und Alterungsbeständigkeit, mit einer matten Oberfläche, wie in den nachfolgenden Beispielen noch verdeutlicht wird.

Die erfindungsgemäßen Massen lassen sich nach den für die Thermoplastverarbeitung üblichen Verfahren, wie Extrusion und Spritzgießen, zu den verschiedenartigsten Formkörpern, wie Gartenmöbel, Automobilinnenteile, Boote, Schilder, Straßenlampenabdeckungen und Kinderspielzeug verarbeiten. Wie erwähnt, eignen sich die erfindungsgemäßen Massen dabei insbesondere zur Herstellung von farbigen matten Formteilen bzw. Formkörpern der genannten Art, wie sie insbesondere bei Gartenstühlen, Automobilteilen und Gebrauchsgegenständen Anwendung finden.

Die in den Beispielen und Vergleichsversuchen beschriebenen Parameter wurden wie folgt bestimmt:
Die Kerbschlagzähigkeit in $[kJ/m^2]$ wurde nach DIN 53453 an bei einer Massetemperatur von 250°C spritzgegossenen Normkleinstäben bei Temperaturen von 23 und -40°C gemessen.

Für die Glanzmessungen wurden die erfindungsgemäßen Formmassen auf einer Spritzgußmaschine der Fa. Arburg, Typ Allrounder, bei einer Massetemperatur von 250°C zu Rundscheiben gespritzt. Die Glanzmessungen wurden nach DIN 67530 mit einem Dr. Lange Reflektometer UME 1 unter einem Einstrahlwinkel von 45° durchgeführt.

Die Erfindung wird durch die nachfolgenden Beispiele näher erläutert. Die in den Beispielen verwendeten Mengenangaben beziehen sich, sofern nicht anders angegeben, auf das Gewicht.

Herstellung des Kautschuklatex

In einem für 10 bar ausgelegten Kessel aus V2A-Stahl mit Blattrührer wurden die folgenden Produkte vorgelegt:
150 Teile Wasser
1,2 Teile des Natriumsalzes einer Paraffinsulfonsäure ($C_{12}$-$C_{18}$)
0,3 Teile Kaliumpersulfat
0,3 Teile Natriumbicarbonat
0,15 Teile Natriumpyrophosphat
Zur Entfernung des Sauerstoffs wurde der Kessel zweimal mit Stickstoff gespült und die Lösung dann in Stickstoff-Atmosphäre auf 65°C erhitzt. Darauf wurden der Lösung 0,5 Teile tert.-Dodecylmercaptan und 16,6 Teile Butadien zugeführt. Eine Stunde nach Polymerisationsbeginn wurden weitere 83,3 Teile Butadien innerhalb von 5 Stunden zudosiert. 5 Stunden nach Beendigung der Butadien-Zugabe, d.h. nach insgesamt 11 Stunden, wurden nochmals 0,5 Teile tert.-Dodecylmercaptan zugegeben. Nach einer Reaktionszeit von insgesamt 19 Stunden wurde bei einem Umsatz von 96 % eine Polybutadien-Emulsion mit einem Feststoffgehalt von 39,2 %, bezogen auf die Emulsion, erhalten. Der Polybutadien-Latex hatte eine Glastemperatur von ca. -80°C und eine mittlere Teilchengröße von 0,08 $\mu$m ($d_{50}$-Wert der integralen Massenverteilung, bestimmt mittels Ultrazentrifuge).

255 Teile der Polybutadien-Emulsion wurden bei 65°C mit 74 Teilen Wasser verdünnt. Zur Agglomeration des Latex wurden 30 Teile einer wäßrigen Dispersion eines Ethylacrylat-Copolymeren zudosiert, das 96 Gew.-% Ethylacrylat und 4 Gew.-% Methacrylamid einpolymerisiert enthielt. Der Feststoffgehalt dieser Dispersion betrug 10 Gew.-%, bezogen auf die Dispersion. Nach der Agglomeration wurde ein Polybutadien-Latex erhalten, in dem etwa 80 Zahlen% der Teilchen im nicht agglomerierten Zustand vorlagen.

Die integrale Massenverteilung, die mittels einer Ultrazentrifuge bestimmt wurde, ergab eine breite Verteilung mit folgendem bimodalem Charakter:

| | |
|---|---|
| $d_{10}$-Wert: | 0,081 $\mu$m |
| $d_{50}$-Wert: | 0,238 $\mu$m |
| $d_{90}$-Wert: | 0,331 $\mu$m. |

Die so erhaltene agglomerierte Polybutadien-Emulsion wurde anschließend wie folgt weiterverarbeitet:
30 Teile des so gewonnenen Latex wurden nach Zugabe von 80 Teilen Wasser mit 0,12 Teilen Emulgator und 0,1 Teil Kaliumpersulfat versetzt. Hierzu wurden 30 Teile eines Gemisches aus 96,4 Teilen Butylacrylat, 2 Teilen Methacrylsäure und 1,6 Teilen Dicyclopentadienylacrylat innerhalb von 2 h zugesetzt. Nach Zulaufende wurde weitere 2 h bei 65°C gerührt.

Zu der so erhaltenen Dispersion wurden nach Zugabe von weiteren 0,025 Teilen Kaliumpersulfat 40 Teile Styrol oder Methylmethacrylat und 1,6 Teilen Dimethylaminoethylacrylat während 2,5 h zudosiert. Nach Zulaufende wurde weitere 2 h bei 65°C gerührt.

Herstellung der schlagzähen Formmasse

Die vorbereiteten Dispersionen wurden mittels Magnesiumsulfatlösung gefällt, mit entionisiertem Wasser gewaschen, entwässert und auf einem Zweischneckenextruder bei 250°C mit der Formmasse B vermischt.

Beispiele 1-1 und 1-2

Für B wurde ein ASA/PC-Blend, für A ein Pfropfcopolymerisat mit A32 = Methylmethacrylat verwendet. Der ASA/PC-Blend wurde nach der Vorschrift der EP-A-224 856 erhalten. Es wurden folgende Mengenverhältnisse eingesetzt:

| Nr.<br>Teile | Vergleich | 1-1 | 1-2 |
|---|---|---|---|
| PC | 69 | 69 | 69 |
| Pfropfkautschuk-<br>g-SAN gem.<br>EP-A-224 856 | 15 | 5 | 0 |
| SAN | 15 | 15 | 15 |
| A(A32=MMA) | - | 10 | 15 |
| Glanz % | 72 | 40 | 28 |

Beispiele 2-1 und 2-2

PPE/HIPS-Blend und Komponente A mit A32 = Styrol

Der PPE/HIPS-Blend wurde nach EP 48 401 hergestellt. Es wurden folgende Mengenverhältnisse eingesetzt:

| Nr.<br>Teile | Vergleich | 2-1 | 2-2 |
|---|---|---|---|
| PPE | 40 | 40 | 40 |
| HIPS | 60 | 60 | 60 |
| Komp. A<br>(A32 = PS) | - | 5 | 10 |
| Modifier<br>Blockkautschuk | 5 | - | - |
| Glanz % | 70 | 37 | 28 |

6

**Patentansprüche**

1. Teilchenförmiges Pfropfpolymerisat A aus

A1: einer Pfropfgrundlage auf der Grundlage eines Polydienkautschuks A1 aus, bezogen auf A1,

A11: 70 bis 100 Gew.-% eines polymerisierbaren Diens und

A12: bis zu 30 Gew.-% eines copolymerisierbaren, ethylenisch ungesättigten Monomeren

mit einer ersten Pfropfhülle A2 aus, bezogen auf A2,

A21: 75 bis 99,8 Gew.-% mindestens eines $C_1$-$C_8$-Alkylacrylats A21,

A22: 0,1 bis 5 Gew.-% mindestens eines polyfunktionellen, vernetzend wirkenden Monomeren A22,

A23: 0,1 bis 20 Gew.-% mindestens eines eine oder mehrere saure oder basische Gruppen enthaltenden Monomeren A23,

und einer zweiten Pfropfhülle A3, bestehend aus, bezogen auf A3,

A31: bis 99,9 Gew.-% mindestens eines vinylaromatischen Monomeren oder Methylmethacrylat (A31),

A32: 0,1 bis 20 Gew.-% mindestens eines eine oder mehrere basische bzw. saure Gruppen enthaltenden Monomeren A32 und

A33: bis 5 Gew.-% mindestens eines polyfunktionellen, vernetzend wirkenden Monomeren A33,

wobei A23 und A32 jeweils unterschiedliche Gruppen bedeuten.

2. Formmasse nach Anspruch 1 im wesentlichen aus 1 bis 50 Gew.-% eines teilchenförmigen Pfropfpolymerisats A nach Anspruch 1 und 50 bis 99 Gew.-% mindestens eines Polymeren oder Copolymeren B sowie einer untergeordneten Menge an üblichen Zusatzstoffen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,Y | DE-A-31 49 046 (BASF AG)<br>* Ansprüche *<br>* Seite 7, Zeile 24 - Zeile 29 *<br>--- | 1,2 | C08F285/00<br>C08L51/00<br>//(C08F285/00,<br>212:08,220:14) |
| D,Y | DE-A-40 11 163 (BASF AG)<br>* Ansprüche *<br>* Seite 4, Zeile 13 - Zeile 17 *<br>--- | 1,2 | |
| A | EP-A-0 139 271 (BAYER AG)<br>* Ansprüche *<br>* Beispiele *<br>* Seite 1, Zeile 2 - Zeile 4 *<br>* Seite 5, Zeile 10 - Seite 6, Zeile 10 *<br>----- | 1,2 | |

**RECHERCHIERTE SACHGEBIETE (Int.Cl.6)**

C08F
C08L

Der vorliegende Recherchenbericht wurde für alle Patentansprüche erstellt

| Recherchenort | Abschlußdatum der Recherche | Prüfer |
|---|---|---|
| DEN HAAG | 25. November 1994 | Persson, E |

EPO FORM 1503 03.82 (P04C03)